# EUROPEAN PATENT SPECIFICATION

(11) **EP 1 196 854 B1**
(45) Date of publication and mention of the grant of the patent: **02.04.2003**
(21) Application number: 00941501.9
(22) Date of filing: 16.06.2000
(51) Int. Cl.: G06F 13/38

(54) **METHOD AND APPARATUS FOR GENERATING A CONTROL SIGNAL BITSTREAM**
VERFAHREN UND GERÄT ZUR ERZEUGUNG EINES STEUERUNGS-SIGNALBITSTROMS
PROCEDE ET APPAREIL DE GENERATION D'UN TRAIN DE BITS DE SIGNAUX DE COMMANDE

(30) Priority: 16.07.1999 US 144337 P
(43) Date of publication of application: 17.04.2002
(73) Proprietor: Thomson Licensing S.A., 92648 Boulogne Cedex (FR)
(72) Inventor: DINWIDDIE, Aaron, Hal, Fishers, IN 46038-3029 (US)
(74) Representative: Kerber, Thierry
(86) International application number: US0016698
(87) International publication number: WO01006379

(56) References cited:
- EP-A- 0 665 502
- US-A- 5 812 645
- US-A- 5 815 297
- EUROPEAN TELECOMMUNICATIONS SATELLITE ORGANIZATION: "Technical Recommandations for Manufacturers of DTH and SMATV Receiving Equipment - DiSEqC Version 4.0 - BUS FUNCTIONAL SPECIFICATION" [Online] 22 March 1996 (1996-03-22) , PARIS XP002149629 Retrieved from the Internet: <URL: http://www.cnj-electronics.com/datasheets/ satellite/diseqc31.pdf> [retrieved on 2000-10-10] page 4 -page 5

## Description

This invention relates to television receivers, and more particularly, to set top terminals having circuitry for controlling external devices.

Current televisions and satellite set top boxes (also known as set top terminals) increasingly must function to control external devices. Devices that are generally controlled by a set top terminal include, but are not limited to, a video cassette recorder, satellite receiver switches, satellite receiver antenna orientation control systems and the like. These external devices require a command signal to be sent from the set top terminal to the device in the form of a modulated carrier. Typically, this modulated carrier is in the form of a pulse width key coded signal (an asynchronous control bitstream). To generate such pulse width key coded signals, additional hardware and software is necessary within the set top terminal to generate appropriate signals to control the various devices. At times, the control signals require substantial computation that may cause a processor within the set top terminal to stop decoding received video signals in order to create the control signals.

The DiSEqC specification is set forth in "Technical Recommendations for Manufacturers of DTH and SMATV Receiving Equipment -DiSEqC Version 4.0-Bus Functional Specification" dated March 22, 1996, and published by the European Telecommunications Satellite Organization.

EP-A-0 665 502 discloses a system for receiving and transmitting serial data using a UART coupled to a transmit FIFO, a receive FIFO and a master state machine. This reference appears to disclose using the output of the UART to generate an envelope for modulating a carrier signal. In this reference the start and stop bits of generated by the UART and the message portion are distinct parts of the serial data.

Therefore, a need exists in the art for an improved method and apparatus for generating control signals, particularly with regard to reducing the overhead of the microprocessor.

The invention provides a method and apparatus for generating control signal bitstreams for both an infrared driver and/or a digital satellite equipment control (DiSEqC) driver using a universal asynchronous receiver transmitter (UART). The UART may be programmed to produce an appropriate bitstream that is then used to modulate a carrier for controlling a particular device, i.e., the IR infrared driver or the DiSEqC driver. Alternatively, the UART can be programmed to generate a DiSEqC signal directly. Using a UART in the present invention reduces the interrupts processed by a microprocessor, thereby reducing the microprocessor overhead.

The teachings of the present invention is described with reference to the accompanying drawings, wherein:
FIG. 1 depicts a block diagram of a set top terminal including the present invention;
FIG. 2 depicts a representation of a 0 bit and a 1 bit as produced by a universal asynchronous receiver transmitter (UART) for modulating an IR driver;
FIG. 3 depicts a representation of a 0 bit and a 1 bit as produced by a UART for modulating a DiSEqC driver;
FIG. 4 depicts a bitstream generated in accordance with the present invention; and
FIG. 5 depicts a bitstream that is produced by a UART that is programmed by start/stop bits.

To facilitate understanding, identical reference numerals have been used, where possible, to designate elements that are common to the figures.

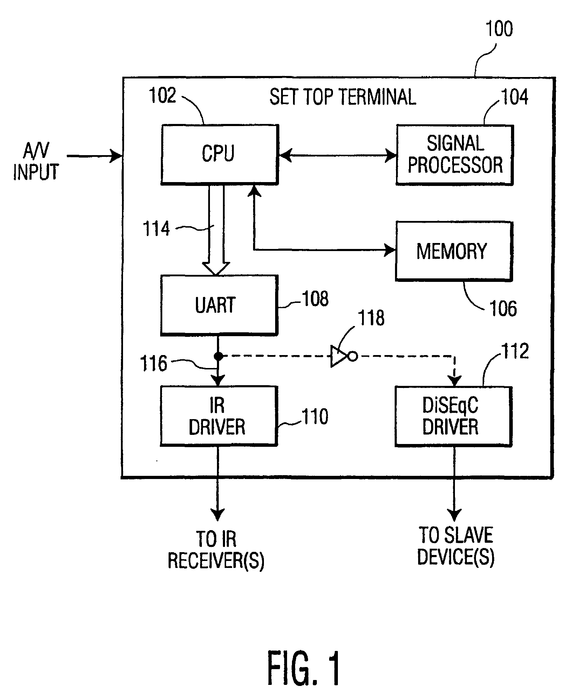

FIG. 1 depicts a block diagram of a set top terminal 100 that operates in accordance with the present invention. Set top terminal 100 comprises central processing unit 102, signal processor 104, memory 106, universal asynchronous receiver transmitter (UART) 108, infrared driver 110, and digital satellite equipment control (DiSEqC) driver 112. Details of the structure and operation of the various components are well known to those skilled in the art and will not be discussed here. Processor 102 operates in conjunction with signal processor 104 and memory 106 to receive and demodulate audio visual signals in a manner that is well known in the art.

Signal processor 104 includes a tuner, RF and IF filtering, and other signal processing components necessary to generate a baseband video signal. Set top terminal 100 may be used for receiving cable television signals, high definition television signals, satellite television signals, or any other kind of signal that requires a set top terminal. In addition, set top terminal 100 may not be a stand alone device but may be built into a television set or other consumer electronics product.

Processor 102 is used for both decoding audio-visual signals as well as generating control signals for external devices that are controlled by the set top terminal. To facilitate generation of the control signals in accordance with the invention, processor 102 in conjunction with memory 106 produces commands on path 114 that are coupled to UART 108. As well known by those skilled in the art, UART 108 converts the parallel signals on path 114 into a serial bitstream on path 116. The serial bitstream is used in a first embodiment of the invention to modulate a carrier in infrared driver 110. The infrared signals are generated by infrared driver 110 and coupled through a transmission mode to infrared receivers in devices that are to be controlled by set top terminal 100. Such devices include video cassette recorders, digital video disk players and recorders, and the like. In a second embodiment of the invention, the serial bitstream generated on path 116 by UART 108 is coupled to digital satellite equipment control (DiSEqC) driver 112. DiSEqC driver 112 generates a control signal that is carried by coaxial cable to a slave device such as a satellite receiver antenna orienter, a satellite dish switch box for selecting between multiple satellite antennas, and the like.

When used as an infrared driver source signal, the technique for sending infrared signals to various consumer electronics devices having infrared receivers is known as infrared (IR) blasting. IR blasting is the act of transmitting an IR code in the format of the receiving device. In the case of set top terminal products with record capability, large tables of hundreds of IR codes for each manufacturer's products are stored in memory 106. Although each of the codes are slightly different, they share many common traits. Each code consists of a predetermined sequence of 0 and 1 bits which make up the respective commands for each of the manufacturers. Each IR code format comprises a plurality of marks, sync bits, 0's, 1's, etc. which ultimately involve either the presence or absence of a carrier frequency.

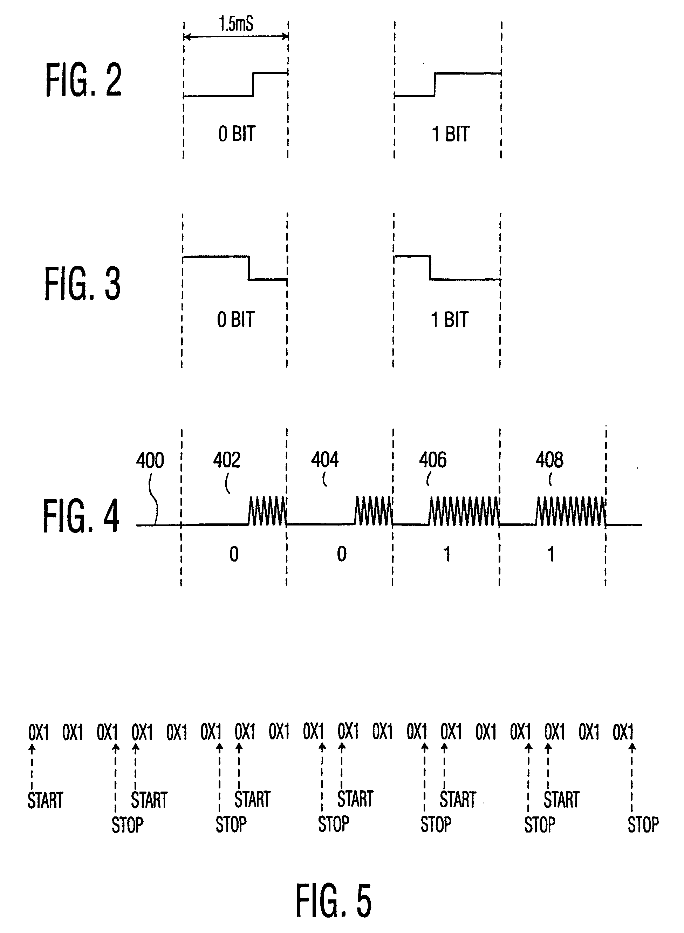

Each code format also specifies the signal structure representative of a 0 bit and a 1 bit. For example, FIG. 2 depicts a 0 bit and a 1 bit structure associated with one type of IR code. Each bit is 1.5 milliseconds in length where a 0 bit includes the presence of 0.5 milliseconds of the carrier frequency and a 1 bit includes the presence of 1 millisecond of the carrier frequency. Each bit, whether 0 or 1, begins with a low level for 0.5 milliseconds. The signal level transitions to a high level, i.e., the presence of carrier frequency, for a second 0.5 milliseconds or stays at the low level for the second 0.5 milliseconds depending on whether the bit is a 0 bit or a 1 bit. Then, the signal level ends with the final 0.5 milliseconds being high for either bit. A sequence of these bits is used to drive the infrared driver 110 to produce an infrared signal having a modulation pattern that is representative of the sequence of bits.

The bit structure is similar for DiSEqC driver 112 except that the bits are inverted as shown in FIG. 3. In FIG. 1, UART 108 may generate the inverted signals directly or inverter 118 may be used between UART 108 and DiSEqC driver 112.

To produce the appropriate bitstreams, UART 108 must be programmed using appropriate start and stop bits. The UART transmission appears as follows: start bit (logical low), followed by some programmable number of bits, terminated with a stop bit (logical high). Consequently, an 18 bit DiSEqC signal consisting of 110011001010000111 would be formed as follows. The start and stop bits always fall on the correct logical states in the waveform because there is no control of the polarity of the output signal. Using the above definition of a 0 or 1 bit, both bit types start with 0.5 milliseconds of logic low, followed by 0.5 milliseconds of either logic high or logic low, followed by 0.5 milliseconds of high. As such, a 0 or 1 can be represented as 0X1 (where each symbol is 0.5 milliseconds duration and X = 0 when a 0 bit is being generated and X = 1 when a 1 bit is being generated). Therefore, a generic DiSEqC command that is 18 bits long would be represented as shown in FIG. 5.

In this example, UART 108 was initialized for 1 start bit, 7 data bits, 1 stop bit at a baud rate of 0.5 milliseconds/bit. By transmitting 6 UART bytes, any arbitrary 18 bit IR driver command can be represented. With the use of an inverter at the output of the UART, any DiSEqC command can be represented. To transmit the 18 bit DiSEqC signal indicated above, the following sequence would be output from UART 108:
011 011 001 001 011 011 001 001 011 001 011 001 001 001 001 011 011 011
wherein the following six bytes are written to UART 108 (the start and stop bits are indicated in parenthesis):

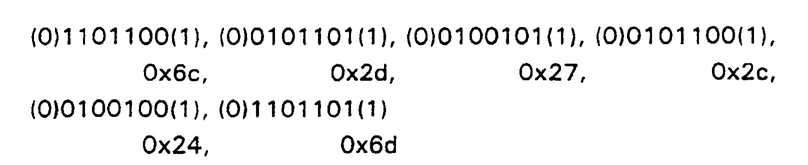

To produce the DiSEqC signal for transmission through the coaxial cable to the slave devices, the bitstream produced by the inverter is used to modulate a 22 kHz carrier signal to produce the appropriate pulse width key (PWK) coded signal for controlling slave devices in a DiSEqC system. In an infrared system, the bitstream produced by the UART is used to directly control the output of an infrared diode.

A major benefit of the arrangement for generating control signals according to the present invention is that UART 108 is shifting out the bits to the driver(s), and microprocessor 102 is only interrupted after a full byte has been shifted out. This reduces the overhead of microprocessor 102 by one ninth since interrupts will only occur every 4.5 milliseconds instead of every 0.5 milliseconds which is needed in the prior art "bitbang" approach. Additionally, because UART 108 is typically able to latch one byte while the previous byte is being clocked out, the system's real time constraints are greatly reduced because microprocessor 102 has an added 4.5 milliseconds of added latency when an interrupt occurs to get the next byte written to UART 108.

In another embodiment of the invention, UART 108 can be used to generate the modulated DiSEqC signal directly. In this arrangement the circuitry for generating the frequency (driver 112) is eliminated. Depending upon the UART, an inverter may be used to produce a correct DiSEqC signal. In that case, UART 108 is set up exactly the same as discussed above for 8 data bits, while the baud rate is set to the carrier frequency, i.e., set to 22 kHz for a DiSEqC signal. As such, many more bytes need to be written out of UART 108 using this approach. UART 108 provides logical 0's by transmitting continuous 0's for 0.5 milliseconds with a baud rate set to 22 kHz. This results in 9 logic low bits being shifted out (start plus 8 data bits) followed by 1 logic high bit, which is not desired, but acceptable because the 1 bit is rolled off by a low pass filter in an envelope detector within a receiver in a slave device. UART 108 provides logical 1's by writing out 0xCC (10101010 binary) for the 0.5 millisecond logic high. The overall pattern output from UART 108 including start and stop bits is 0 (start) 101010101 (stop) which generates a perfect carrier frequency.

FIG. 4 depicts a representation of a directly generated bitstream having the 22 kHz carrier generated by UART 108 for directly driving a DiSEqC slave device i.e., UART 108 is used as a general purpose programmable timer. The bitstream 400 contains a first bit 402 having a low level signal, then a burst of the 22 kHz carrier for a period of 0.5 milliseconds to generate a 0 bit. This is followed by bit 404 which is identical to the first bit 402, followed by a 1 bit at bit 406 and another 1 bit at bit 408. The 1 bits begin with a low level signal and then are followed by a burst of one millisecond of the 22 kHz carrier signal.

To produce a standard DiSEqC signal without using an inverter, UART 108 is used to generate a 0.5 millisecond interrupt by setting the baud rate at 20 kHz and shifting out a dummy bit. Every 0.5 milliseconds, an I/O line is toggled appropriately to generate the correct DiSEqC waveform.

Although various embodiments which incorporate the teachings of the present invention have been shown and described in detail herein, those skilled in the art can readily devise many other varied embodiments that still incorporate these teachings.

## Claims

1. A method of generating a control signal using a universal asynchronous receiver transmitter (108), known as UART, coupled to a signal transmitter, comprising the steps of:
loading the UART with a bitstream associated with the control signal;
sequentially reading an output bitstream sequence from the UART; and
modulating a carrier signal using the sequentially read bitstream sequence to produce a pulse width key, known as PWK, coded signal, **characterized in that**
the loading step comprises loading a bitstream that contains less than all of the bits necessary to generate the control signal, and wherein the bitstream is combined with the start and stops bits generated by the UART to form the output bitstream representative of the control signal such that the start and stop bits generated by the UART are included in the message portion of the control signal.

2. The method of claim 1, wherein the PWK coded signal comprises bits that are each 1.5 millisecond in width.

3. The method of claim 2, wherein each bit represent either a logical 1 or 0, where a logical 1 comprises a 500 millisecond period of low signal level, and a 1000 millisecond period of high signal level, and a logical 0 comprises a 1000 millisecond period of low signal level and a 500 millisecond period of high signal level.

4. The method of claim 2, wherein each bit represent either a logical 1 or 0, where a logical 0 comprises a 500 millisecond period of low signal level, and a 1000 millisecond period of high signal level, and a logical 1 comprises a 1000 millisecond period of low signal level and a 500 millisecond period of high signal level.

5. The method of claim 1, wherein the carrier signal is an infrared signal.

6. The method of claim 1, wherein the carrier signal is a 22 KHz signal.

7. The method of claim 1, wherein the control signal conforms to the DiSEqC standard.

8. Apparatus for generating a control signal, comprising:
a processor (102) for generating bitstream sequence associated with the control signal;
a universal asynchronous receiver transmitter, known as UART, coupled to said processor, the UART (108) receiving the bitstream sequence and providing an output bitstream; and
a driver, coupled to said UART, for modulating a carrier with the output bitstream to produce a pulse width key, known as PWK, coded signal, **characterized in that**
the bitstream sequence contains less than all of the bits necessary to generate the control signal, and wherein the UART combines the bitstream sequence with start and stop bits to form the output bitstream representative of the control signal such that the start and stop bits generated by the UART are included in the message portion of the control signal.

9. The apparatus of claim 8, wherein the PWK coded signal comprises bits that are each 1.5 millisecond in width.

10. The apparatus of claim 8, wherein each bit represent either a logical 1 or 0, where a logical 1 comprises a 500 millisecond period of low signal level, and a 1000 millisecond period of high signal level, and a logical 0 comprises a 1000 millisecond period of low signal level and a 500 millisecond period of high signal level.

11. The apparatus of claim 8, wherein each bit represent either a logical 1 or 0, where a logical 0 comprises a 500 millisecond period of low signal level, and a 1000 millisecond period of high signal level, and a logical 1 comprises a 1000 millisecond period of low signal level and a 500 millisecond period of high signal level.

12. The apparatus of claim 8, wherein the carrier signal is an infrared signal.

13. The apparatus of claim 8, wherein the carrier signal is a 22 KHz signal.

14. The apparatus of claim 10, wherein the driver is a DiSEqC driver.

## Patentansprüche

1. Verfahren zur Erzeugung eines Steuersignals unter Anwendung eines universellen asynchronen Empfängers/Senders (108), bekannt als UART (universal asynchronous receiver transmitter), der mit einem Signalsender verbunden ist, mit folgenden Schritten:
Laden des UART mit einem Bitstrom für das Steuersignal,
sequentielles Lesen einer Ausgangsbitstromfolge aus dem UART und
Modulieren eines Trägersignals unter Anwendung der sequentiell gelesenen Bitstromfolge zur Erzeugung eines impulsbreitencodierten Signals, bekannt als PWK (pulse width key),
**dadurch gekennzeichnet, dass**
der Ladeschritt das Laden eines Bitstroms enthält, der weniger als alle Bit enthält, die zur Erzeugung des Steuersignals benötigt werden, und wobei der Bitstrom mit den durch den UART erzeugten Start- und Stop-Bits kombiniert wird, zur Bildung des das Steuersignal darstellenden Ausgangsbitstroms, derart, dass die durch den UART erzeugten Start- und Stop-Bit in dem Nachrichtenteil des Steuersignals enthalten sind.

2. Verfahren nach Anspruch 1, wobei das PWK-codierte Signal Bits mit je einer Breite von 1,5 ms enthält.

3. Verfahren nach Anspruch 2, wobei jedes Bit entweder eine logische 1 oder eine logische 0 darstellt, wobei eine logische 1 eine Periode von 500 ms eines niedrigen Signalwertes und eine Periode von 1000 ms des hohen Signalwertes und eine logische 0 eine Periode von 1000 ms des Signals mit dem niedrigen Wert und eine Periode von 500 ms für das Signal mit dem hohen Wert enthält.

4. Verfahren nach Anspruch 2, wobei jedes Bit entweder eine logische 1 oder eine logische 0 darstellt und eine logische 0 eine Periode von 500 ms des Signals mit dem niedrigen Wert und eine Periode von 1000 ms des Signals mit dem hohen Wert und eine logische 1 eine Periode von 1000 ms des Signals mit dem niedrigen Wert und eine Periode von 500 ms für das Signal mit dem hohen Wert enthält.

5. Verfahren nach Anspruch 1, wobei das Trägersignal ein Infrarotsignal ist.

6. Verfahren nach Anspruch 1, wobei das Trägersignal ein Signal mit 22 kHz ist.

7. Verfahren nach Anspruch 1, wobei das Steuersignal die DiSEqC-Norm erfüllt.

8. Vorrichtung zur Erzeugung eines Steuersignals mit:
einem Prozessor (102) zur Erzeugung einer Bitstromfolge für das Steuersignal,
einem universellen asynchronen Empfänger/Sender, bekannt als UART (universal asynchronous receiver transmitter), der mit dem Prozessor verbunden ist, wobei der UART (108) die Bitstromfolge empfängt und einen Ausgangsbitstrom liefert, und
einem mit dem UART verbundenen Treiber zur Modulation eines Trägers mit dem Ausgangsbitstrom zur Erzeugung eines impulsbreitencodierten Signals, bekannt als PWK (pulse width key), **dadurch gekennzeichnet, dass**
die Bitstromfolge weniger als alle Bit enthält, die zur Erzeugung des Steuersignals benötigt werden, und wobei der UART die Bitstromfolge mit Start- und Stop-Bits kombiniert, zur Bildung des Ausgangsbitstroms für das Steuersignal derart, dass die durch den UART erzeugten Start- und Stop-Bit in dem Nachrichtenteil des Steuersignals enthalten sind.

9. Vorrichtung nach Anspruch 8, wobei das PWK-codierte Signal Bit mit einer Breite von 1,5 ms enthält.

10. Vorrichtung nach Anspruch 8, wobei jedes Bit entweder eine logische 1 oder eine logische 0 darstellt, wobei eine logische 1 eine Periode von 500 ms des niedrigen Signalwertes und eine Periode von 1000 ms des hohen Signalwertes darstellt, und eine logische 0 eine Periode von 1000 ms eines Signals mit dem niedrigen Signalwert und eine Periode von 500 ms ein Signal mit dem hohen Wert enthält.

11. Vorrichtung nach Anspruch 8, wobei jedes Bit entweder eine logische 1 oder eine logische 0 darstellt und eine logische 0 eine Periode von 500 ms des niedrigen Signalwertes und eine Periode von 1000 ms des hohen Signalwertes darstellt, und eine logische 1 eine Periode von 1000 ms eines Signals mit dem niedrigen Wert und eine Periode von 500 ms eines Signals mit dem hohen Wert enthält.

12. Vorrichtung nach Anspruch 8, wobei das Trägersignal ein Infrarotsignal ist.

13. Vorrichtung nach Anspruch 8, wobei das Trägersignal ein Signal mit 22 kHz ist.

14. Vorrichtung nach Anspruch 10, wobei der Treiber ein DiSEqC-Treiber ist.

## Revendications

1. Procédé de génération d'un signal de commande à l'aide d'un émetteur-récepteur asynchrone universel, appelé UART, couplé à un émetteur de signaux, comprenant les étapes de :
chargement d'un train binaire associé au signal de commande dans l'UART ;
lecture séquentielle d'une suite de trains binaires de sortie dans l'UART ; et
modulation d'un signal de porteuse à l'aide de la séquence de trains binaires lue séquentiellement en vue de produire un signal codé par modulation de largeur d'impulsion, appelée PWK, **caractérisé en ce que**
l'étape de chargement comprend le chargement d'un train binaire contenant un nombre de bits inférieur au nombre total de bits nécessaires pour générer le signal de commande, et dans lequel le train binaire est combiné aux bits de départ et d'arrêt générés par l'UART en vue de former le train binaire de sortie représentant le signal de commande, de façon à ce que les bits de départ et d'arrêt générés par l'UART soient incorporés dans la partie de message du signal de commande.

2. Procédé selon la revendication 1, dans lequel le signal codé par PWK comprend des bits présentant chacun une largeur de 1,5 milliseconde.

3. Procédé selon la revendication 2, dans lequel chaque bit représente soit un 1 logique, soit un 0 logique, un 1 logique comprenant un niveau bas de signal d'une période de 500 millisecondes et un niveau haut de signal d'une période de 1000 millisecondes, et un 0 logique comprenant un niveau bas de signal d'une période de 1000 millisecondes et un niveau haut de signal d'une période de 500 millisecondes.

4. Procédé selon la revendication 2, dans lequel chaque bit représente soit un 1 logique, soit un 0 logique, un 0 logique comprenant un niveau bas de signal d'une période de 500 millisecondes et un niveau haut de signal d'une période de 1000 millisecondes, et un 1 logique comprenant un niveau bas de signal d'une période de 1000 millisecondes et un niveau haut de signal d'une période de 500 millisecondes.

5. Procédé selon la revendication 1, dans lequel le signal de porteuse est un signal infrarouge.

6. Procédé selon la revendication 1, dans lequel le signal de porteuse est un signal de 22 kHz.

7. Procédé selon la revendication 1, dans lequel le signal de commande est conforme à la norme DiSEqC.

8. Appareil de génération d'un signal de commande, comprenant :
un processeur (102) destiné à générer une séquence de trains binaires associée au signal de commande ;
un émetteur-récepteur asynchrone universel, appelé UART, couplé audit processeur, l'UART (108) recevant la séquence de trains binaires et fournissant un train binaire de sortie ; et
un pilote, couplé audit UART, destiné à moduler une porteuse avec le train binaire de sortie en vue de produire un signal codé par modulation de largeur d'impulsion, appelée PWK, **caractérisé en ce que**
la séquence de trains binaires contient un nombre de bits inférieur au nombre total de bits nécessaires pour générer le signal de commande, et dans lequel l'UART combine la séquence de trains binaires aux bits de départ et d'arrêt en vue de former le train binaire de sortie représentant le signal de commande, de façon à ce que les bits de départ et d'arrêt générés par l'UART soient incorporés dans la partie de message du signal de commande.

9. Appareil selon la revendication 8, dans lequel le signal codé par PWK comprend des bits présentant chacun une largeur de 1,5 milliseconde.

10. Appareil selon la revendication 8, dans lequel chaque bit représente soit un 1 logique, soit un 0 logique, un 1 logique comprenant un niveau bas de signal d'une période de 500 millisecondes et un niveau haut de signal d'une période de 1000 millisecondes, et un 0 logique comprenant un niveau bas de signal d'une période de 1000 millisecondes et un niveau haut de signal d'une période de 500 millisecondes.

11. Appareil selon la revendication 8, dans lequel chaque bit représente soit un 1 logique, soit un 0 logique, un 0 logique comprenant un niveau bas de signal d'une période de 500 millisecondes et un niveau haut de signal d'une période de 1000 millisecondes, et un 1 logique comprenant un niveau bas de signal d'une période de 1000 millisecondes et un niveau haut de signal d'une période de 500 millisecondes.

12. Appareil selon la revendication 8, dans lequel le signal de porteuse est un signal infrarouge.

13. Appareil selon la revendication 8, dans lequel le signal de porteuse est un signal de 22 kHz.

14. Appareil selon la revendication 10, dans lequel le pilote est un pilote de type DiSEqC.
